# EUROPEAN PATENT SPECIFICATION

(11) **EP 0 278 919 B1**
(45) Date of publication and mention of the grant of the patent: **25.05.1994**
(21) Application number: 88830034.0
(22) Date of filing: 01.02.1988
(51) Int. Cl.: B60N 2/02

(54) **Squab for a motor vehicle rear seat**
Polsterelement für Kraftwagenrücksitz
Coussin pour siège arrière de véhicule automobile

(30) Priority: 17.02.1987 IT 5301487 U
(43) Date of publication of application: 17.08.1988
(73) Proprietor: FIAT AUTO S.p.A., 10135 Torino (IT)
(72) Inventor: Cerrato, Edilio, I-10100 Torino (IT); Brignone, Ernesto, I- Piossasco (Torino) (IT)
(74) Representative: Quinterno, Giuseppe

(56) References cited:
- EP-A- 0 115 972
- DE-A- 2 927 200
- DE-A- 3 110 130

## Description

This device is about a motor vehicle rear seat where the squab, in order to allow a greater load capacity, can be adjusted in two or more different slopes or easily removed, if it is necessary.

In the German Patent No. DE-A-3 110 130 is described a motor vehicle rear seat whose squab can take up two or more different slopes depending on all the load requirements of the user.

One of the main disadvantages of the movable squab described in the above mentioned German Patent is represented by the fact that it has a complex mechanism which is composed of two metal tubes to be rotated against the action of a spring. The supports, fixed to the two sides of the vehicle, are of metal too and have a spring to maintain them coupled with the tubes. The purpose of the device is to make a motor vehicle rear seat squab more simple and therefore less expensive.

Said purpose is achieved by a motor vehicle rear seat squab equipped with an interior padding and having, on its upper edge, a metal tube protruding at either end, the squab having on each of its sides two tabs, one top tab, formed at the end of the protruding tube, and one smaller bottom tab, designed to fit into two supports attached to the vehicle sides to match the position of the above tabs, characterised in that the bottom supports, made of plastic, have a V-shaped seat opening upwards and the top supports, made of plastic material, have two or more parallel or V-shaped approximately vertical grooves with an open end. Additional features and advantages of the device will become apparent from the following description given by way of non-limitative example, of which:

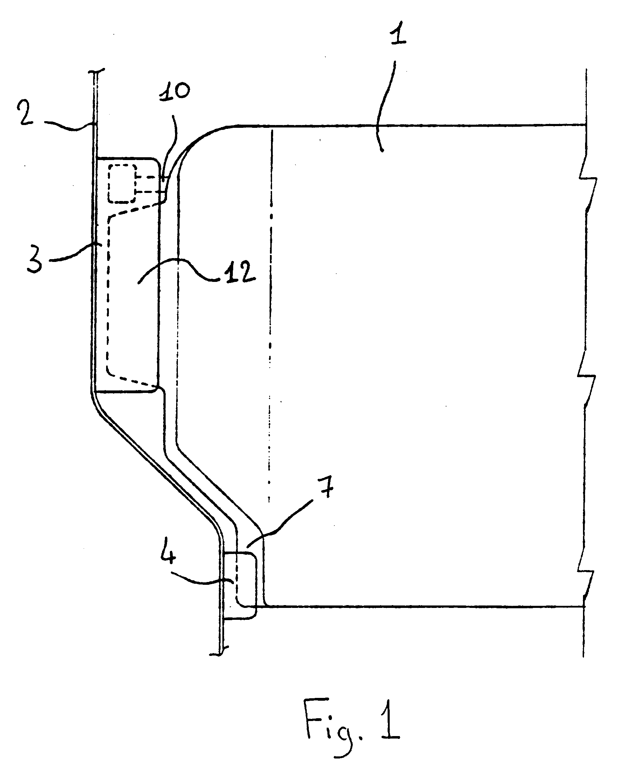

- -Fig. 1: is a front view of part of the squab attached to its supports;
- -Fig. 2: is a plan section of the device of Fig.1;
- -Fig. 3: is a view of the top and bottom supports;
- -Fig. 4: is a view of an additional top support design.

With reference to the enclosed figures, 1 is a rear seat squab of a motor vehicle on the sides 2 of which are attached two supports 3 and 4, top and bottom support respectively.

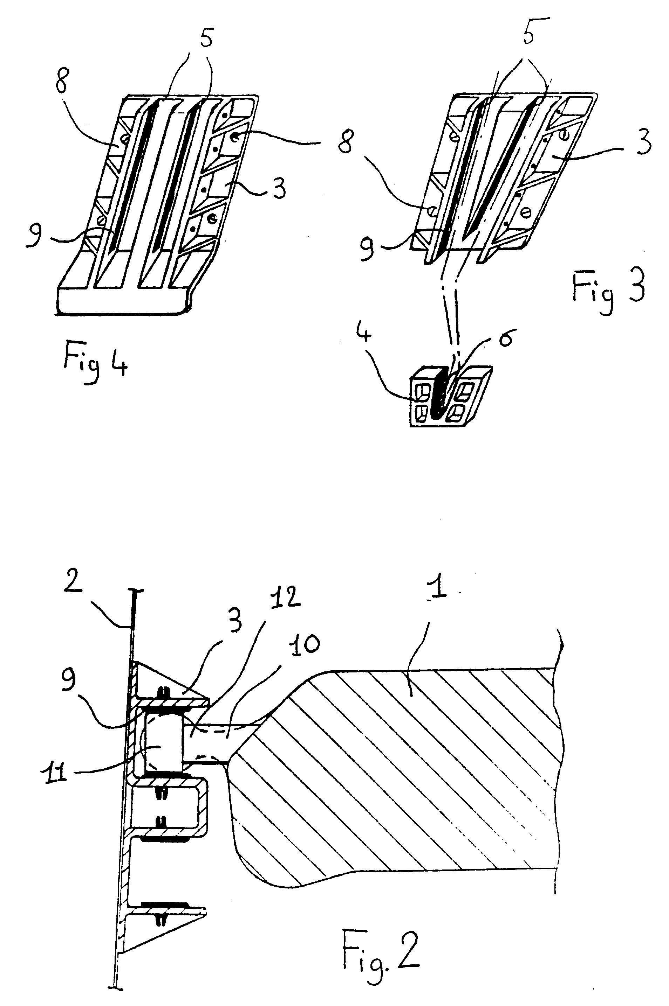

The top supports 3 are made of plastic material and have two or more grooves 5 cut parallel to each other (see Fig.4) or converging to make a V shape (see Fig. 3), while the bottom supports 4 consist of a small plastic material block with a V-shaped seat 6 open upwards, to receive the tabs 7 forming the bottom edge of the squab 1.

The supports have holes 8 to fix them to the vehicle sides and are equipped with anti-vibration strips 9 made of elastomer material.

The upper part of the squab 1 is equipped with a stiffening cross member 10 of metal with T-shaped ends 11 designed to fit into the grooves 5 of the top support, together with tabs 12 which make the upper edge of the squab.

In this way the squab, through the tabs and supports, is positioned in a simple and practical way and without any troublesome noise, due to the anti-vibration strips 9.

## Claims

1. Motor vehicle rear seat squab (1) equipped with an interior padding and having, on its upper edge, a metal tube (10) protruding at either end, the squab having on each of its sides two tabs, one top tab, formed at the end (11) of the protruding tube, and one smaller bottom tab (7), designed to fit into two supports (3,4) attached to the vehicle sides to match the position of the above tabs, characterised in that the bottom supports (4), made of plastic, have a V-shaped seat opening (6) upwards and the top supports (3), made of plastic material, have two or more parallel or V-shaped, approximately vertical grooves (5) with an open end.

## Patentansprüche

1. Kraftfahrzeugrücksitz-Rückenlehne (1), weiche mit einer inneren Polsterung ausgestattet ist und an ihrem oberen Rand ein an jedem Ende hervorstehendes Metallrohr (10) aufweist, wobei die Rückenlehne an jeder ihrer Seiten zwei Vorsprünge aufweist, einen an dem Ende (11) des hervorstehenden Rohrs gebildeten oberen Vorsprung, und einen kleineren unteren Vorsprung (7), die derart ausgebildet sind, daß sie in zwei Halter (3, 4) passen, welche an den Fahrzeugseiten derart angebracht sind, daß sie mit der Position der oben genannten Vorsprünge übereinstimmen,
dadurch gekennzeichnet,
daß die aus Kunststoff hergestellten unteren Halter (4) eine nach oben gerichtete V-förmige Sitzöffnung (6) aufweisen, und daß die aus Kunststoffmaterial hergestellten oberen Halter (3) zwei oder mehrere parallele oder V-förmige, näherungsweise vertikale Vertiefungen (5) mit einem offenen Ende aufweisen.

## Revendications

1. Coussin (1) pour siège arrière de véhicule automobile, équipé d'un rembourrage interne et ayant, à son bord supérieur, un tube métallique (10) qui dépasse aux deux extrémités, le coussin ayant, sur chacun des deux côtés, deux pattes, une patte supérieure formée à l'extrémité (11) du tube en saillie, et une patte inférieure plus petite (7), destinées à se loger dans deux supports (3, 4) fixés aux côtés du véhicule afin qu'ils correspondent à la position des pattes précitées, caractérisé en ce que les supports inférieurs (4), qui sont formés d'une matière plastique, ont une ouverture (6) d'un siège en V, tournée vers le haut, et les supports supérieurs (3), formés d'une matière plastique, ont au moins deux gorges approximativement verticales (5) qui sont parallèles ou en V, ayant une extrémité ouverte.
